# EUROPÄISCHE PATENTANMELDUNG

(11) **EP 1 087 301 A2**
(43) Veröffentlichungstag der Anmeldung: **28.03.2001**
(21) Anmeldenummer: 00119772.2
(22) Anmeldetag: 11.09.2000
(51) Int. Cl.: G06F 17/30

(54) **Vorrichtung und Verfahren zur Speicherung und Anfrage von Informationen**

(30) Priorität: 16.09.1999 DE 19944392
(71) Anmelder: Borgs Industries GmbH, 30165 Hannover (DE)
(72) Erfinder: Grünewald, Uwe, 30169 Hannover (DE); Meyer, Andreas, 30449 Hannover (DE)
(74) Vertreter: Kewitz, Ansgar

(57) **Zusammenfassung**

Die Erfindung betrifft ein Datenbanksystem mit einem Speicher- und/oder Lade-Modul (11), das in einer Datenbank (16) eine Vielzahl von Informationsobjekten (18) verwaltet, wobei die Informationsobjekte (18) 1-n Klassen (21) zur Aufnahme von 1-z Verweisen (22) zu anderen Informationsobjekten (18) speichern können, mit einem Anfrage- und/oder Eingabe-Modul (12), das mit dem Speicher- und/oder Lade-Modul (11) kommuniziert und das ein hierarchisches Fragesystem (13) aufnimmt und abarbeitet, wobei in dem hierarchische Fragesystem (13) 1-n Fragen (14) hierarchisch miteinander verknüpft sind und jede Frage (14) einer Klasse (21) des Informationsobjektes (18) zugeordnet ist. Bei einer Eingabe eines neuen ersten Informationsobjekts (18) werden die Antworten, soweit sie beim Durchlaufen des Fragesystems (13) abgegeben werden, als weitere neue abzuspeichernde oder bereits bestehende Informationsobjekte (18) über die entsprechende Klasse (21) mit Hilfe der Verweise (22) mit dem ersten Informationsobjekt (18) verknüpft. Bei einer Anfrage wird das hierarchische Fragesystem (13) durchlaufen, wobei die Informationsobjekt (18) ausgewählt werden, deren Verweise (22) die höchsten Übereinstimmungen mit den gegebenen Antworten haben.

## Beschreibung

Die Erfindung betrifft eine Vorrichtung zur Anfrage und/oder Speicherung von Informationen.

Bekannte Datenbanken und ihre Anfragesprachen setzen fundierte Kenntnisse von der Struktur der Datenbank und dem damit verbundenen Ort der Informationen sowie von der Syntax der Anfragesprache voraus. Bei relationalen Datenbanken hat sich SQL als Standard zur Anfrage und Eingabe von Informationen herausgestellt. SQL als deklarative Sprache setzt jedoch fundamentale Kenntnisse von der Syntax und insbesondere von der Struktur der Tabellen und ihrer Verknüpfungen miteinander voraus. Auch aus netzwerkorientierte Modellen sind ohne Kenntnisse von Struktur und Aufbau nur schwer Informationen zu erlangen. Objektorientierte Datenbankansätze können hingegen Informationen bereitstellen ohne exakte Kenntnis von der Struktur zu haben, indem die für jedes Informationsobjekt definierten Methoden angewandt werden. Dies setzt jedoch wiederum die Kenntnis der einzelnen Methoden beim Benutzer voraus.

Bei allen genannten Datenbanksystemen versucht die Struktur einen Teilbereich der Wirklichkeit abzubilden. Keines der Systeme ist geeignet alle Informationsobjekte und Informationen, mit denen die Benutzter im täglichen Leben konfrontiert werden, abzubilden und zu verknüpfen.

Aufgabe der vorliegenden Erfindung ist es, ein Datenbanksystem bereitzustellen, das ohne Kenntnis der Struktur über eine interaktive Kommunikation mit dem Benutzer jegliche Form von Informationen miteinander verknüpft und diese ohne Kenntnis der Syntax der Anfragesprache bzw. Speichersprache dem Benutzter in einer interaktiven Anfrage bereitstellt.

Gelöst wird diese Aufgabe durch die Merkmale des Anspruchs 1, insbesondere durch ein Anfrage- und Eingabe-Modul, das ein hierarchisches Fragesystem verwaltete und dieses bei der Interaktion mit dem Benutzter steuert. Das Fragesystem stellt dem Benutzer zu Beginn sehr allgemeine Fragen, die eine Antwort auf das einzugebenen bzw. zu suchende Informationsobjekt zulassen. Hierbei muß der Benutzer nicht auf jede Frage eine Antwort geben. Er ist in der Auswahl der Fragen lediglich im Umfang der gegebenen Fragen und ihrer logischen Abhängigkeit beschränkt. Es werden die Antworten auf die Fragen analysiert und als neue Informationsobjekte abgelegt, soweit nicht bereits die vorgeschlagenen Informationsobjekte der Antwort entsprechen und als solche ausgewählt werden.

Ferner wird die Aufgabe durch das Verfahren nach Anspruch 15 gelöst, insbesondere dadurch, daß bei der Eingabe eines Satzobjektes mit Hilfe eines hierarchischen Fragesystem das 1-n Fragen verknüpft, die den 1-n Klassen zugeordnet sind, das Satzobjekt durch Verweise zu anderen Informationsobjekten näher bestimmt wird, wobei der Einstieg in das hierarchische Fragesystem durch Fragen erfolgt, die keinerlei Vorwissen für eine sinnvolle Beantwortung benötigen. Bei einer Anfrage, die in einer natürlichen Sprache erfolgen kann, wird die Anfrage soweit vorhanden in Fragewörter, Verben und Satzobjekte zerlegt und anhand dieser Informationen eine Frage der 1-n Klassen bestimmt, über deren Verweis die Antwort gegeben werden kann. Alternativ kann eine Frage ausgewählt werden, deren Antwort gegeben wird, um über diese Anwort das gesuchte Informationsobjekt zu finden.

Bei der Eingabe wird in einer Vordefinierungsebene bestimmt, ob es sich um ein Verb, ein Adjektiv/Adverb oder ein Satzobjekt (Substantiv, das sowohl Objekt als auch Subjekt sein kann) handelt. Für den Fall, daß es sich um ein Verb handelt, wird in der Frageebene vom Benutzer bestimmt, in welchem Kontext das Verb verwendet werden kann, um dann als Informationsobjekt abgespeichert zu werden. Für den Fall, daß es sich um ein Adjektiv/Adverb handelt, wird vom Benutzer in der Frageebene der Kontext der Verwendung festgelegt, um dann als Informationsobjekt abgespeichert zu werden. Für den Fall, daß es sich um ein Satzobjekt handelt, wird in der Frageebene mit Hilfe eines hierarchischen Fragesystem das 1-n Fragen verknüpft, die den 1-n Klassen zugeordnet sind, das Satzobjekt durch Verweise zu anderen Informationsobjekten näher bestimmt, wobei der Einstieg in das hierarchische Fragesystem durch Fragen erfolgt, die keinerlei Vorwissen für eine sinnvolle Beantwortung benötigen.

Ein wesentlicher Vorteil liegt darin, daß nicht das Verfahren konkrete Kategorisierungen vorgibt (im Gegensatz zum Thesaurus bei Word® für Windows®), sondern das es die Anwender sind, die Kategorisierungen erzeugen, wenn sie Fragen nach Bedeutungen beantworten in der Absicht, eigentlich nur das Satzobjekt beschreiben zu wollen. Jede Eigenschaft eines Satzobjektes auch ein möglicher Oberbegriff eines Informationsobjektes und somit eine Kategorie, zu der das Informationsobjekt gehört und nach der ein Anwender ein Informationsobjekt finden kann, wird als Informationsobjekt abgespeichert.

Ein weiterer Vorteil liegt darin, daß im besten Falle nur Satzobjekte beschrieben werden müssen. Die Zusammenhänge und Abläufe lassen sich herauslesen, wenn man die Antwort-Wörter (Eigenschaften) der Satzojekte miteinander vergleicht, die ein Resultat der gleichen bzw. zurück verweisenden Frage sind. Jede Fragen ist eine Bedeutungskategorie. Eine Bedeutungskategorie des einen Satzobjektes kann mit der gleichen (wenn auch zurückzeigenden) Bedeutungskategorie eines anderen Satzobjektes verglichen werden. Diese Bedeutungskategorien bilden die Brücke der möglichen Aktionen und Verhältnisse zwischen den Informationsobjekten. Deshalb müssen alle Satzobjekte als Informationsobjekte einheitlich beschrieben werden, denn nur so sind sie miteinander vergleichbar.

Weitere vorteilhafte Ausführungsformen sind in den Unteransprüchen aufgeführt. Es folgt eine detaillierte Beschreibung anhand der Zeichnungen. Es zeigt:
- **Figur 1**: die erfindungsgemäße Vorrichtung bestehend aus einem Anfrage- und Lade-Modul, das ein hierarchisches Fragesystem aufgenommen hat, aus einem Speicher- und Lade-Modul, das mit einer Datenbank direkt und/oder über ein Netzwerk verbunden ist und das mit dem Anfrage- und Lade-Modul zusammenarbeitet ;
- **Figur 2**: die Struktur eines Informationsobjektes, mit einer eindeutigen Objekt-Id, mit einem Feld für Informationen, mit Klassen, die den 1-n Fragen des hierarchischen Fragesystems zugeordnet sind, und mit Verweisen zu anderen Informationsobjekten;
- **Figur 3**: die mögliche Umsetzung in einem relationalen Datenbankmodell;
- **Figur 4**: zeigt ein Ablaufdiagramm für die Bestimmung der Wortart (Satzobjekt, Verb, Adjektiv), die Bestandteil des hierarchischen Fragesystems sein kann;
- **Figur 5-5a**: zeigt ein Ablaufdiagramm für ein Satzobjekt, das durch die vorgegebenen Fragen des Fragesystems bestimmt wird;
- **Figur 6-6a**: zeigt ein Ablaufdiagramm für ein Adjektiv/Adverb, das durch die vorgegeben Fragen des Fragesystems bestimmt werden kann;
- **Figur 7**: zeigt ein Verbverwendungsmodul, das Graphisch bestimmt in welchen Zusammenhang Verben verwendet werden könne, wobei dieser Zusammenhang vom Fragesystem bei der Eingabe abgefragt werden kann;
- **Figur 8**: zeigt eine Relation von Synonymen Fragewörtern, die bei einer Anfrage des Systems das Finden einer Antwort erleichtern;
- **Figuren 9a-9h**: zeigen ein Ablaufdiagramm nach der Vordefinierungsphase wobei das hierarchische Fragesystem für die einzelnen Wortarten unterschiedlich aufgebaut ist.

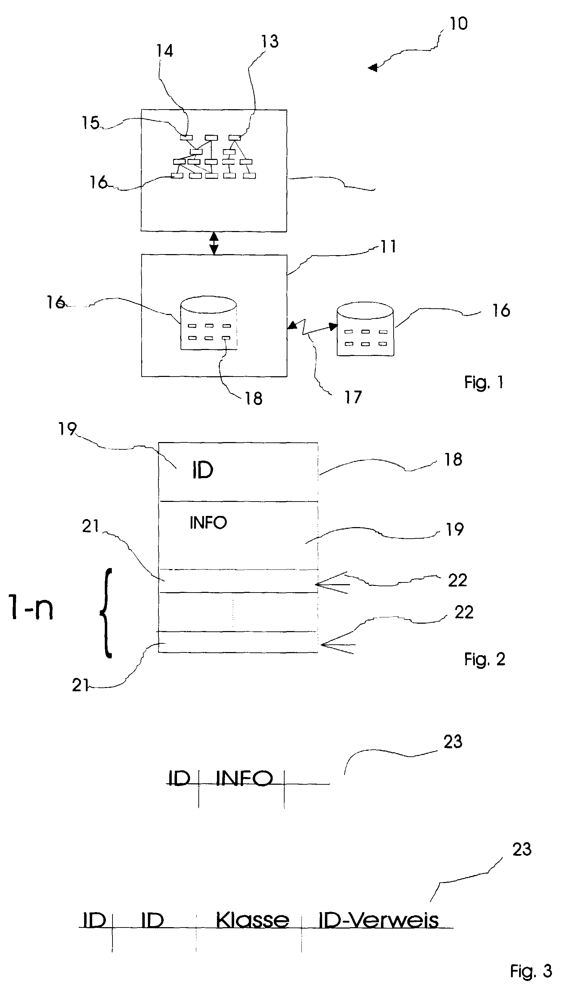

Figur 1 zeigt eine Vorrichtung zur Anfrage und Speicherung von Informationen 10, die aus einem Speicher- und Lade-Modul 11 besteht, das mit einem Anfrage- und Eingabe-Modul 12 kommuniziert. Die Kommunikation kann entweder lokal auf dem Arbeitsplatzrechner erfolgen, als auch über ein - nicht dargestelltes - Netzwerk.

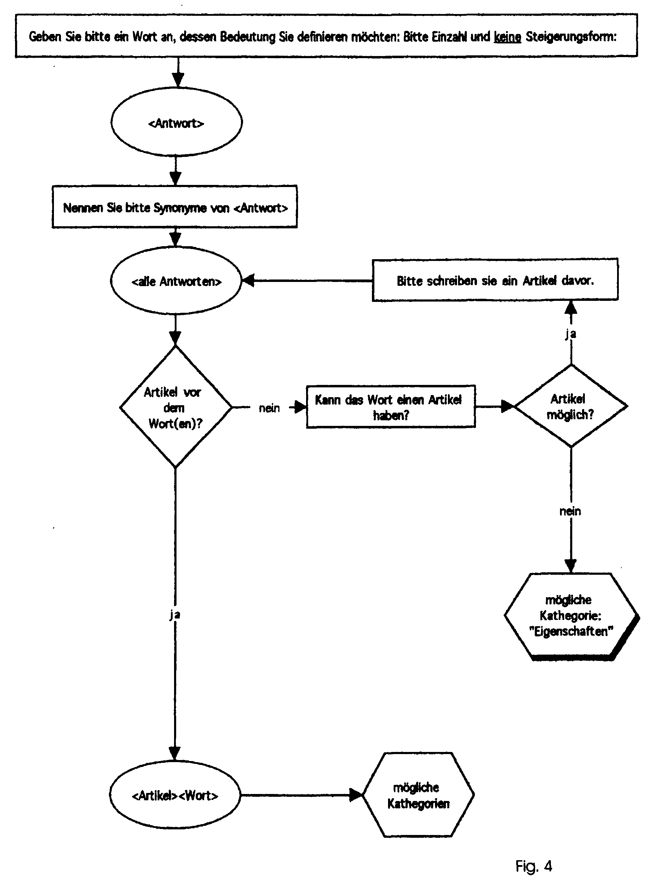

Das Speicher- und Lade-Modul 11 dient zur Ablage und zum Laden von Informationsobjekten 18, die in einer Datenbank 16 abgelegt sind. Das Speicher- und Lade-Modul 11 kann ein bekanntes relationales, eine netzwerkorientieres oder ein objektorientiertes Datenbanksystem sein. Die Figur 4 zeigt die mögliche Struktur eines relationalen Datenbanksystems, auf die noch später eingegangen wird. Die Datenbank 16 ist entweder lokal auf dem Server angeordnet, oder der Zugriff erfolgt über ein Netzwerk 17, vorzugsweise mit bekannten Techniken, wie über IP, IPX oder Apple-Talk.

Das Anfrage- und Eingabe-Modul 12 dient zur Aufnahme eines hierarchischen Fragesystems 13. Das Fragesystem besteht aus einer Vielzahl von 1-n Fragen 14, die aufgrund von unterschiedlichen Abhängigkeiten auf unterschiedlichen Frageebenen 15 miteinander verknüpft sind. Die Fragen 14, die am wenigsten Vorwissen benötigen, sind in einer der höchsten Frageebene 15 angeordnet. Der Benutzer hat hierbei die Möglichkeit einen bestimmten Eingangspunkt in das Fragesystem 13 interaktiv zu wählen. Diese ist insbesondere dann von Interesse, wenn der Benutzer genau weiß, welche besonderen Eigenschaften das als Informationsobjekt 18 abzulegende Satz- / Informationsobjekt aufweist und wie er diese definieren möchte.

Die Eigenschaften eines Informationsobjektes 18 werden durch Figur 2 näher beschrieben. So besteht die Struktur eines Informationsobjektes 18 aus einer eindeutigen Objekt-Id 19, aus Informationen 20, die als unstrukturierte Informationen z.B. als Blob (Binary Large Objekt) abgespeichert werden können, und aus 1-n Klassen 21 zur Aufnahme von Verweisen 22. Die Verweise charakterisieren wiederum das Informationsobjekt 18 durch weitere Informationsobjekte 18. Jeder der 1-n Klassen 21 ist eine Frage 14 zugeordnet. Da jedoch eine Vielzahl von Antworten möglich sind, reicht ein Verweis 22 regelmäßig nicht aus.

So kann z.B. die Frage: 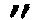 Was hat das ,Objekt'", die sich auf ein Auto bezieht, der Klasse x zugeordnet sein. Die möglichen Antworten können jedoch alle Teile umfassen, die ein Auto aufweist. Die möglichen Antworten Räder, Karosserie, Motor, Lenkrad etc. führen dazu, daß jeweils ein neues Informationsobjekt angelegt wird. Der Benutzter hat hierbei die Möglichkeit auf bereits vorhandene Vorschläge zurückzugreifen, die das Speicher- und Lade-Modul 11 bereitstellt, oder ein neues Informationsobjekt 18 anzulegen, wobei der Benutzer den Grad der Detaillierung selber festlegen kann. Bricht der Benutzer die Eingabe ab, so setzt das Anfrage- und Eingabe-Modul 12 beim nächsten Bestandteil an, das der Benutzer zu beschreiben hat. Der Benutzer hat jederzeit die Möglichkeit die Eingabe abzubrechen oder sie zu beenden. Ein Abbrechen bedeutet, daß die Hierarchie des Fragesystems 13 nicht weiterverfolgt wird. Je nach Form der Durchwanderung der Fragehierarchie (depth first, width first) wird auf der obersten Frageebene 15 des Fragesystems eine Befragung fortgesetzt wird oder daß nur eine neue Frage 15 auf der nächst höheren bzw. gleichen Frageebene 15 gestellt wird. Die Auswahl der Fragen kann auch durch Profiles bestimmt werden, durch die das Benutzerverhalten analysiert wird, um dann die am häufigsten gestellten Fragen als erstes zu stellen. Diese Profiles können auf Gruppen oder Personen abgestellt sein. Die Profiles werden dynamisch während der Benutzung angepaßt.

Das Fragesystem 13 kann dabei dynamisch in Form eines aus Verknüpfungen bestehenden netzförmigen Gebildes geladen werden. Dieses dynamische Laden erlaubt den Einsatz von unterschiedlichen Fragesystemen 13, was insbesondere bei unterschiedlichen Sprachen von Interesse sein kann.

Figur 3 zeigt die mögliche Struktur der Datenbank des Speicher-und Lade-Moduls. Dieses besteht aus zwei Tabellen 23 und 24. In der Objekt-Tabelle 23 wird die eindeutige Kennung in Form einer Objekt-Id 19 abgelegt und Informationen 20, die der Benutzter dem Informationsobjekt 18 ggf. direkt hinterlegen möchte. Die Verweistabelle 24, dient zur Verknüpfung der Informationsobjekt 18 miteinander. Hierbei wird die ID, des im Fragesystem 13 übergeordneten Informationsobjektes 18 und die ID des Antwortobjektes hinterlegt. In der Spalte mit der Bezeichnung Klasse wird die Nummer 1-n der Frage hinterlegt. Der Verweis 22 über die ID dient als Eindeutiger Schlüssel für die Informationsobjekte der Verweistabelle 24. Die hier vorgeschlagenen Realisierung ist nur eine mögliche von Vielen, die je nach verwendetem Datenbanksystem unterschiedlich ausfallen können. Insbesondere bei propriäteren Systemen kann die Abbildung in Form der Datenbankstruktur unterschiedlichster Art sein.

Bei der Eingabe von neuen Informationen ist eine Vordefnierungsphase vorgesehen. Die Vordefinierungsphase dient zur Klärung der folgenden Fragen:
1. Ist das eingegebene Wort überhaupt ein Satzobjekt, das hinterfragt werden kann? (alles was kein Verb, Adjektiv/Adverb ist , jedoch nicht jedes Substantiv ist ein Satzobjekt z.B. Substantivierungen)
2. Falls nicht, ist es ein Wort, auf das man kommen kann, wenn das "Tun" eines Satzobjektes hinterfragt wird? - und wenn ja, wie kann das "Tun" hinterfragt werden? Die Art und Weise, wie das 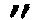 Tun" hinterfragt werden kann sind auch automatisch die Bedeutungen (Klassifizierungen) des Verbs, plus ein eventuell genannter Oberbegriff des Verbs.
3. Falls es ein Adjektiv ist: Gibt es Steigerungen und Gegenteile des Wortes? Falls ja, so haben diese Wörter zueinander eine bestimmte Bedeutungs-Position auf einer Bedeutungsgeraden in einem Bedeutungs-Pool (die gesamte Gerade). Die Unterscheidung, ob mit dem Adjektiv ein Satzobjekt oder ein Vorgang beschrieben wird (Adverb), ist vor allem für das spätere Parsen einer Anfrage interessant, da somit in einem vollständigen Satz der tatsächlich Bezug eines Adjektivs schneller entdeckt werden kann.
4. Eine weitere wichtige Unterscheidung ist, ob das "Haben" eines Satzobjektes möglicherweise auch ein Teil des Satzobjektes ist.

### Beispiel:

*Peter hat ein Bein*
*Bein ist ein Teil von Peter (Teil-Von-Relation) => das Bein muß zu selben Zeit am selben Ort sein, wie Peter*
*Peter hat einen Bruder*
*Bruder ist kein Teil von Peter, Bruder ist Verwandter von Peter => Peter und Bruder haben die selbe Abstammung, müssen aber nicht zur selben Zeit am selben Ort sein.*

Bei der Eingabe wird in der Vordefinierungsphase die Kategorie des einzugebenden Informationsobjekts nun wie folgt bestimmt. Das Fragesystem bestimmt in einem ersten Schritt, ob die einzugebende Information ein Verb, ein Satzobjekt oder ein Adjektiv/Adverb ist. Entsprechend dieser Kategorisierung, die entweder automatisch oder interaktiv erfolgen kann, schließt sich in Abhängigkeit der Kategorisierung der einzugebenden Information in einem zweiten Schritt die spezifischeren weiteren Fragen 13 an. Figur 4 zeigt den Aufbau eines möglichen Fragesystem 13 in der Vordefinierungsphase zur Bestimmung der Kategorien.

Ein Grundprinzip der Erfindung ist die Erzeugung von Objektklassen, die nicht durch ein konkretes Wort kategorisiert werden können, sondern nur durch Fragen 14 . Fragen 14, die bei Beginn nur aus unkonkreten Wörtern bestehen, aber jeweils nach einer konkreten Antwort fordern. Das sind die für Vergleiche zuständigen Bedeutungsklassen der Informationsobjekte 12, die durch die Eingabe des Anwenders unterschiedliche oder gleiche Inhalte bekommen, und somit Informationsobjekte 12 vergleichbar machen und sie miteinander verknüpfen.

Dabei wird davon ausgegangen, daß die menschliche Vorstellungskraft auf ein bestimmtes Bedeutungsgebiet durch die Sinne und Verarbeitungsmöglichkeiten des Gehirns begrenzt ist.

Diese Begrenzung wird durch die Eckpfeiler 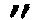 Haben, Sein und Tun" ausgedrückt, die keinerlei Bedeutungsüberklappung haben und zwischen denen kein leerer Raum für eine weitere Bedeutung ist.

Die Wechsel-Beziehungen zwischen den "Seins" kann dabei nur durch das "Haben" und "Tun" erklärt werden. Deshalb reicht es aus, jedes "Sein" (Satzobjekt) nach seinem "Haben" und "Tun" zu hinterfragen, um die Beziehung zwischen Informationsobjekten (Satzobjekten) herstellen zu können.

Jede dieser Grundbeziehungen ist durch jeweils alle W-Fragen weiter unterteilbar. (z.B.: Sein: was sein, wo sein, wie sein, ...Haben: was haben, wo haben, wie haben, ...Tun: was tun, wo ...)

Somit werden die Bedeutungskategorien feiner unterteilt.

Alle diese Teile werden wiederum feiner unterteilt (Prioritäten: wie z.B.: wollen, können, müssen, dürfen, sollen, ohne Priorität, Einsatz von "nicht", ...): z.B.: Was ist Satzobjekt, was muß Satzobjekt sein, was will Satzobjekt sein, ...)

Weiter Verfeinerung sind: immer, fast immer, meisten, manchmal, selten, fast nie, nie.

Die Grundfragen 14 zur Charakterisierung eines Satzobjektes im zweiten Schritt werden somit vornehmlich aus den Bestandteil der folgenden Tabelle generiert.

| | | | |
|---|---|---|---|
| Was, wo, wie, wann, warum, wohin, woher, worauf, ... | Muß, ,kann will, soll, darf, ... | Nicht | Sein, tun, haben, (plus Verben, die auf eine Frage mit tun bestimmt wurden) |

Im Fragesystem 13 stehen in einer der höchsten Ebene Fragen 14, die aus den Bestandteilen Was, sein/tun/haben bestimmt werden. Dem Benutzer steht es jedoch frei eigene Fragen 14 aus diesen bereitgestellten Bestandteilen zu wählen, um so seine Frage 14 selber zu konstruieren, mit der er die Informationsobjekte, die er eingibt, verknüpfen möchte. Die Konstruktion kann z.B. durch Pulldown-Menüs erfolgen. Jede mögliche Frage 14 entspricht einer Verweistabelle 24 über die das Informationsobjekt 18 genauer bestimmt wird.

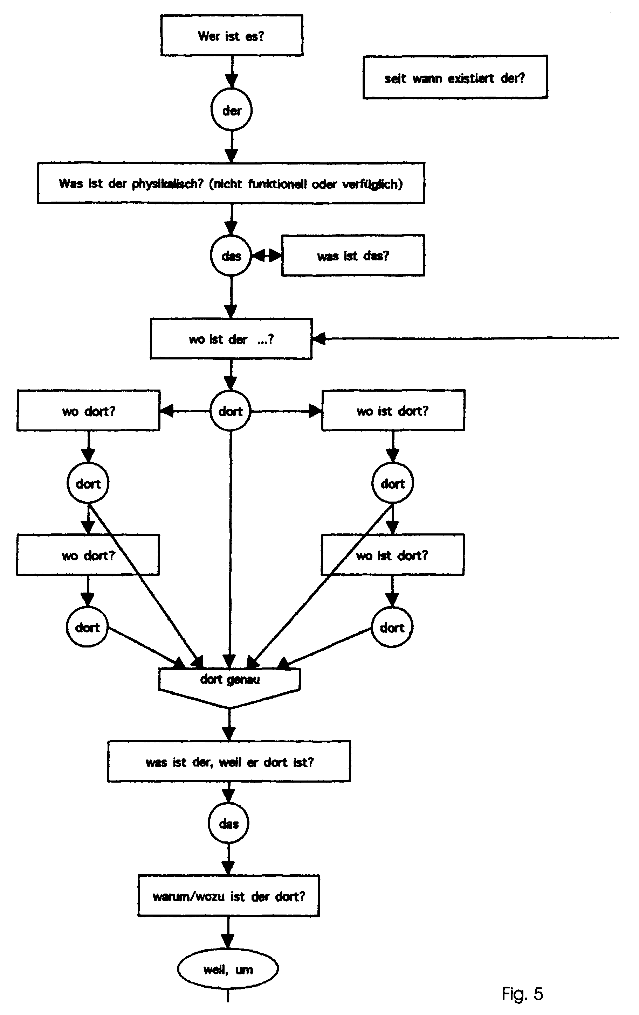

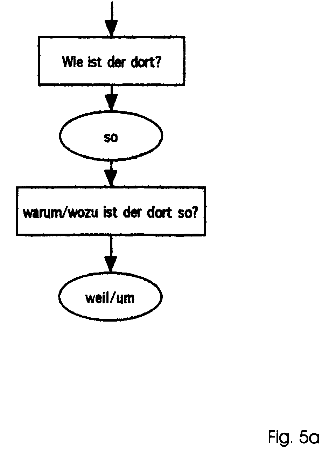

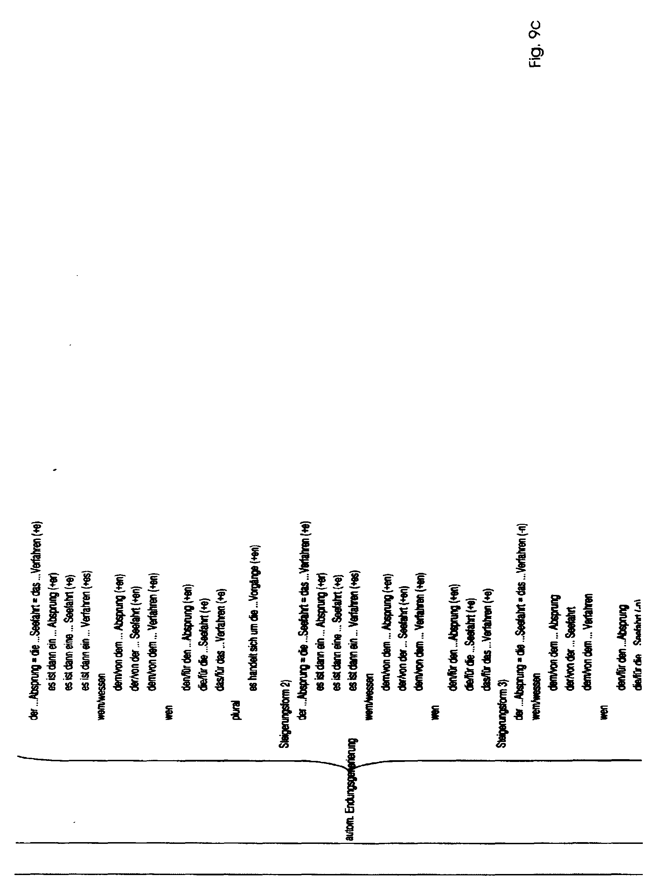

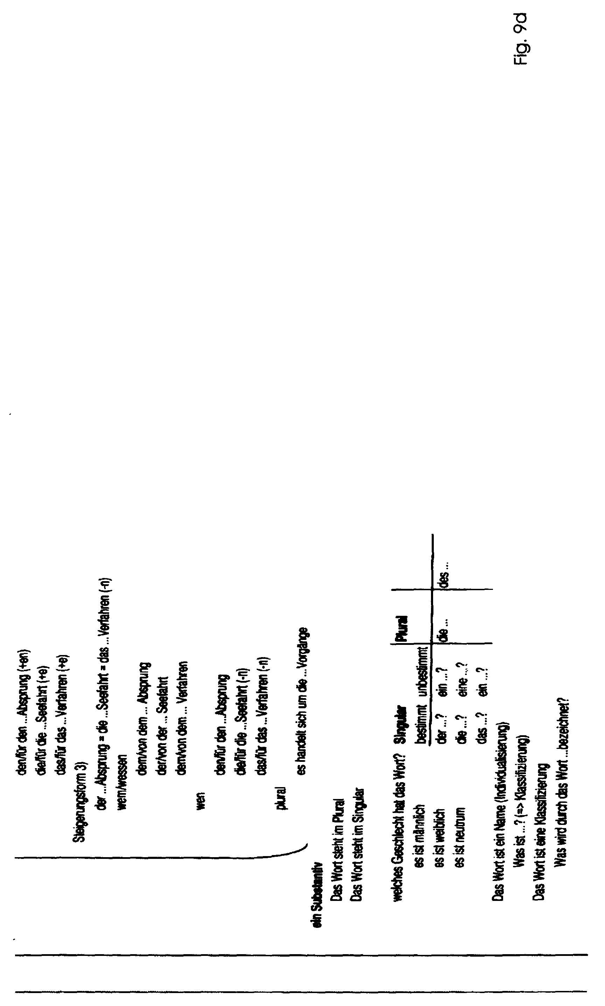

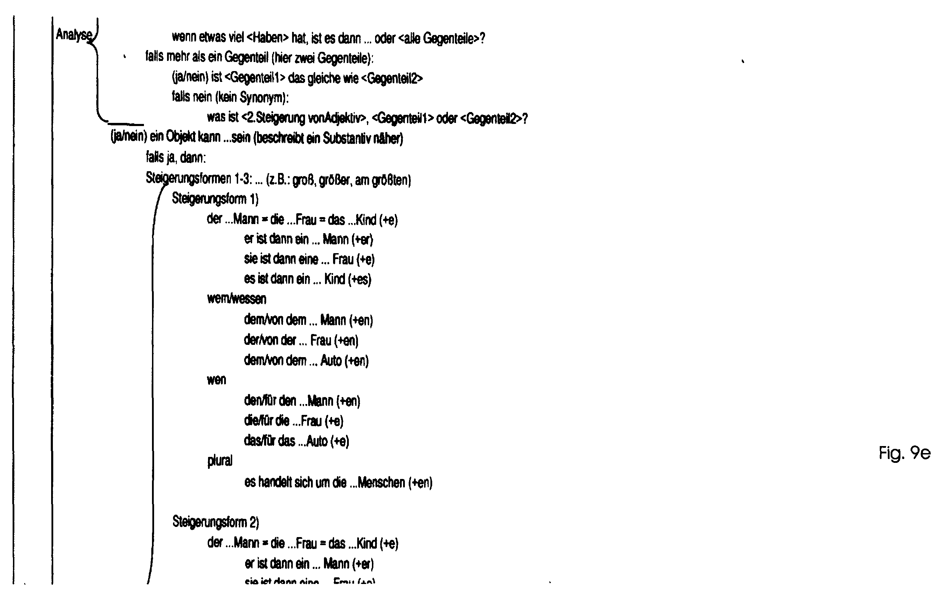

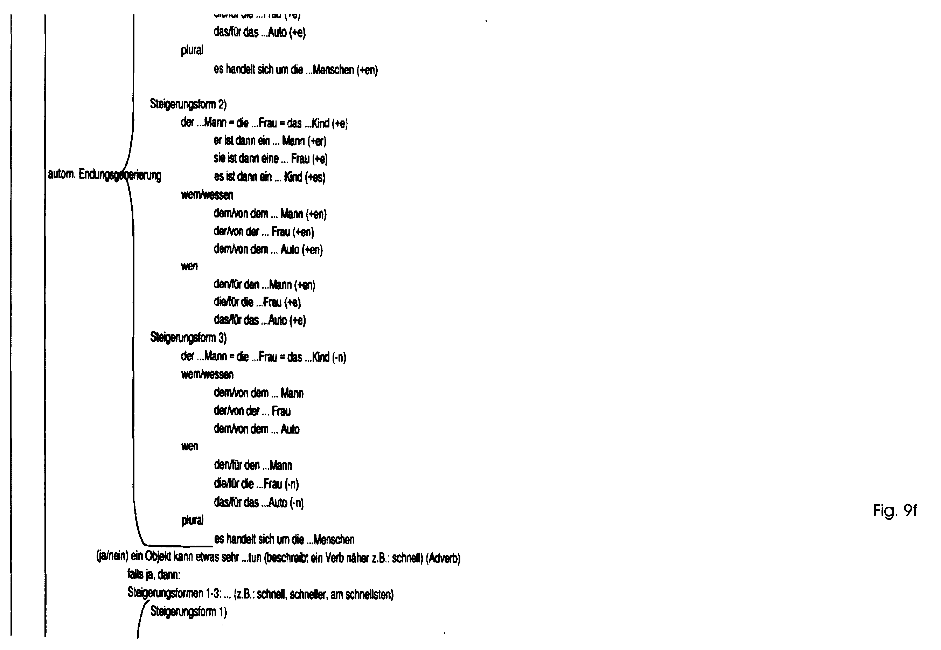

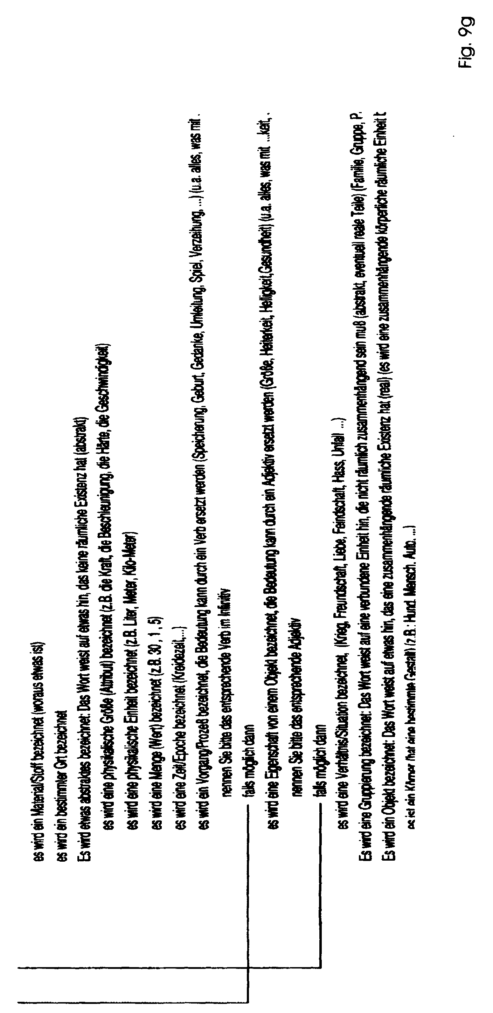

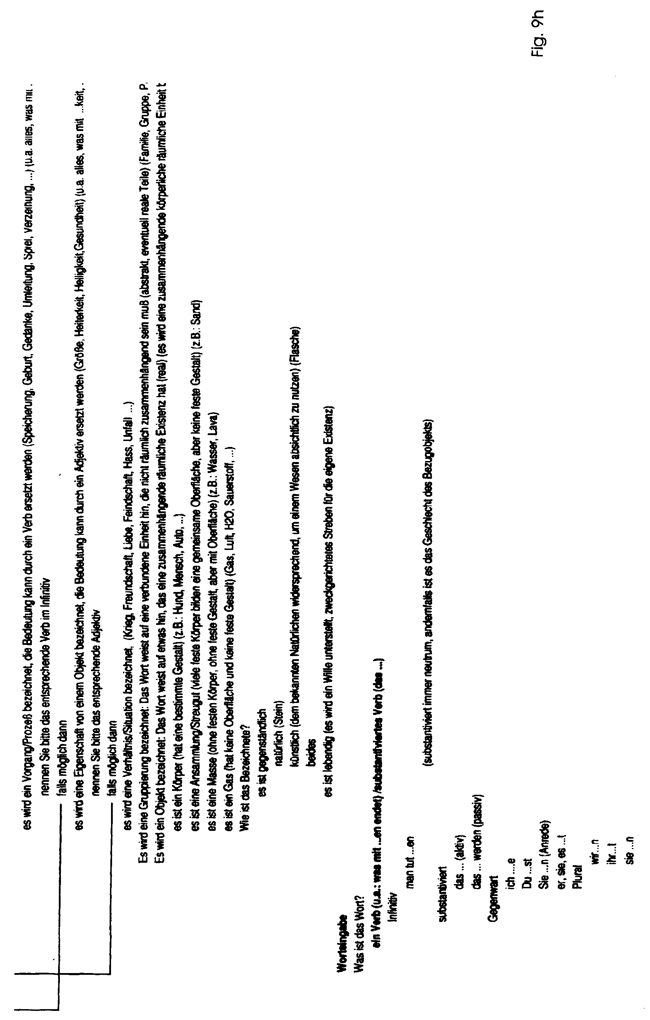

Figuren 5, 9c und 9d zeigen einen möglichen Aufbau des Fragesystems zur Verknüpfung von Satzobjekten. Jede Antwort auf eine Frage, soweit sie nicht im Informationsobjekt selber gespeichert werden, wie z.B. das Geschlecht, werden durch Verweise 22 zu anderen Informationsobjekten 18 realisiert ( Die Speicherung im Informationsobjekt 18 selber dient vornehmlich zur Optimierung der Datenbank ). Hierbei wird entweder ein bereits bestehendes Informationsobjekt 18 mit dem neuen verknüpft oder es wird ein weiteres neues Informationsobjekt 18 angelegt und abgespeichert. Der Benutzer kann hierbei bestimmen welchen Detailliertheitsgrad er bei der Bestimmung der Informationsobjekte 18 wählen möchte, indem er interaktiv die gewünschten Fragen auswählt. Falls der Benutzer der Auffassung ist, daß genügend Informationen zu einem Informationsobjekt 18 eingegeben wurden, so kann die weitere Befragung beendet werden. Wurde z.B. auf die Frage 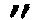 Was tut es?" ein bestimmtes Verb angegeben, so können bei den weiter Fragen wie z.B. 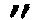 Wie tut es?" das Verb tun durch das bestimmte Verb ersetzt werden. Ferner können durch die Hilfsverben 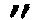 muß, darf, kann" der Grad der Notwendigkeit einer bestimmten Eigenschaft bestimmt werden. Wurde z.B. auf die Frage 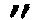 Was muß der Baum haben?" ein bestimmtes Satzobjekt z.B. Kohlendioxid angegeben, so kann automatisch die Konsistenz der Datenbank überprüft werden. Denn wenn kein Informationsobjekt vorhanden ist, das auf die Frage 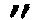 Was macht es?" die Antwort Kohlendioxid hat, so besteht eine Inkonsistenz. Diese Überprüfung kann soweit gehen, daß für jedes so referenzierte Informationsobjekt die Muß-Fragen beantwortet sein müssen. Im Idealfall entstehen hierdurch Zyklen im Verweissystem. So wäre ein Zyklus z.B. :
(Frage n) Was muß der Baum haben? = Kohlendioxid
(Frage n+1) Was macht der Baum? = produzieren
(Frage n+1')Was produziert der Baum? = Sauerstoff
(Frage n)Was muß der Mensch haben? = Sauerstoff
(Frage n+1)Was macht der Mensch? = einatmen, ausatmen
(Frage n+1')Was atmet der Mensch aus? = Kohlendioxid.

Hierdurch ist es möglich insbesondere in Unternehmen oder in komplexen Produkten festzustellen, ob und ggf. wo Mängel bestehen können. Diese Konsistenzprüfung kann entweder manuell angestoßen werden, oder bereits bei der Beantwortung der Frage überprüft werden.

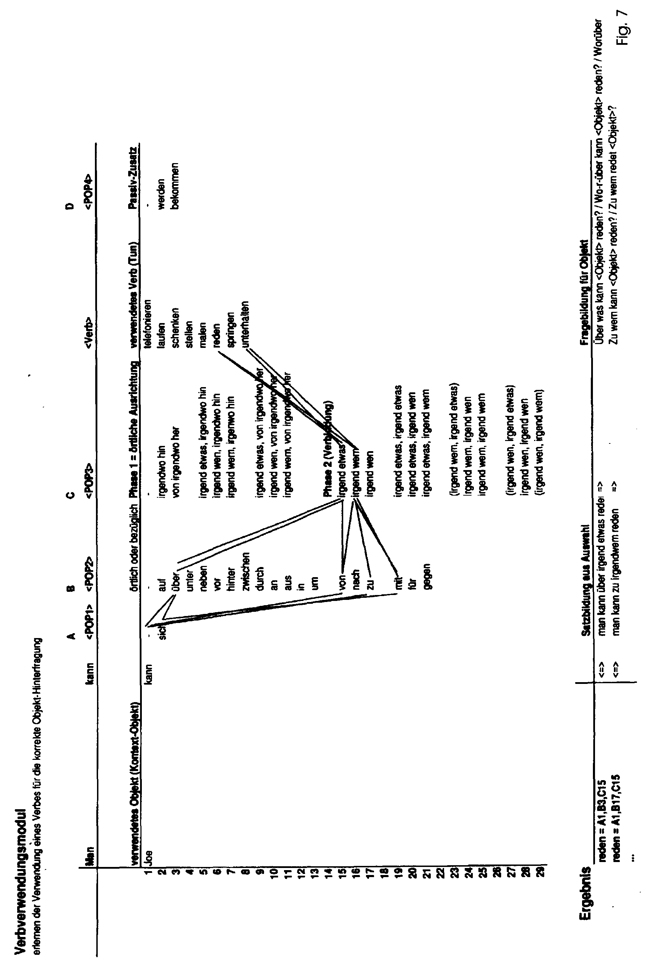

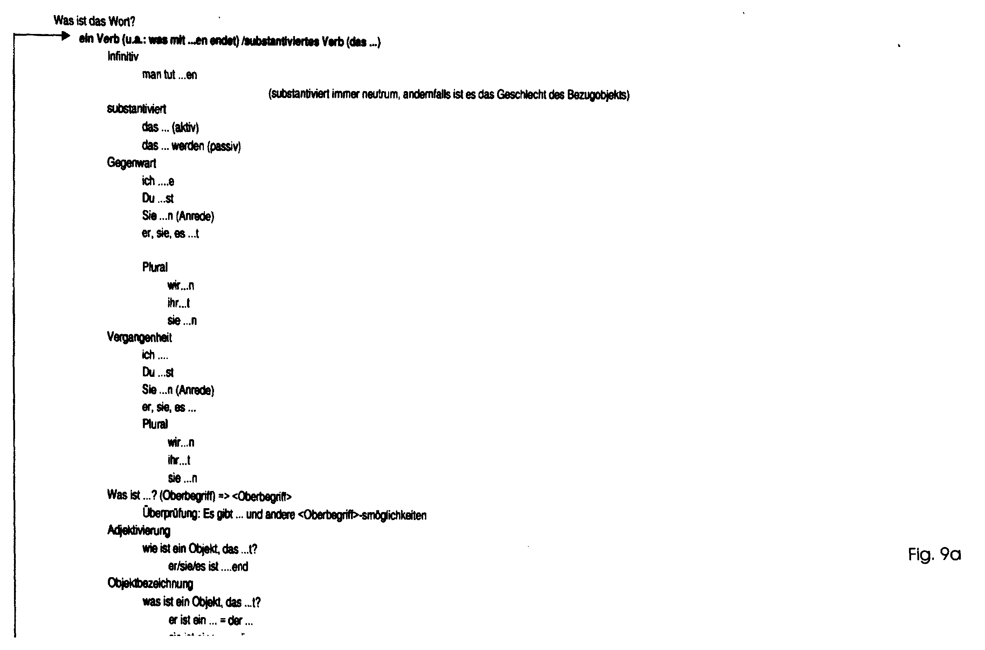

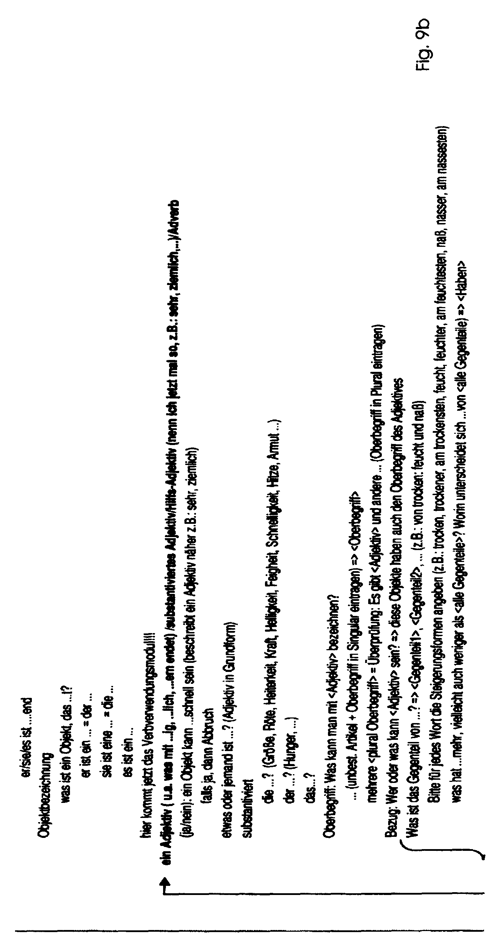

Figuren 7, 9a und 9b zeigen eine mögliche Bestimmung des Kontextes für Verben. Hierbei wird festgelegt in welcher Satzstellung und mit welchen Pronomen das Verb verwendet werden kann. Ferner können Verweise auf Synonyme bestimmt werden. Durch diese Verwendungsangaben ist bereits geklärt, wie ein Satzobjekt bezüglich der Verben hinterfragt werden kann. Hierbei wird vorzugsweise davon ausgegangen, daß Verben nur in Verbindung mit Satzobjekten verstanden werden. Tauchen Verben nur im Kontext eines Satzobjektes auf, so ist der Ablauf folgendermaßen:

Ein Verb wird bei der Beschreibung eines Satzobjektes (Bedeutung: was tut das Satzobjekt) vom Anwender eingegeben und, falls unbekannt, werden die verschiedenen Schreibweisen des Verbs und Fragemöglichkeiten abgespeichert. Somit bestimmt das Verb, das vom Anwender eingegeben wird, welche Fragen, bezüglich des Satzobjektes, aus dem Verb generiert werden sollen. Hierbei handelt es sich um Fragen, in denen das Verb Bestandteil ist und diese Art des Tuns, bei dem bestimmten Satzobjekt, tiefergehend hinterfragt wird.

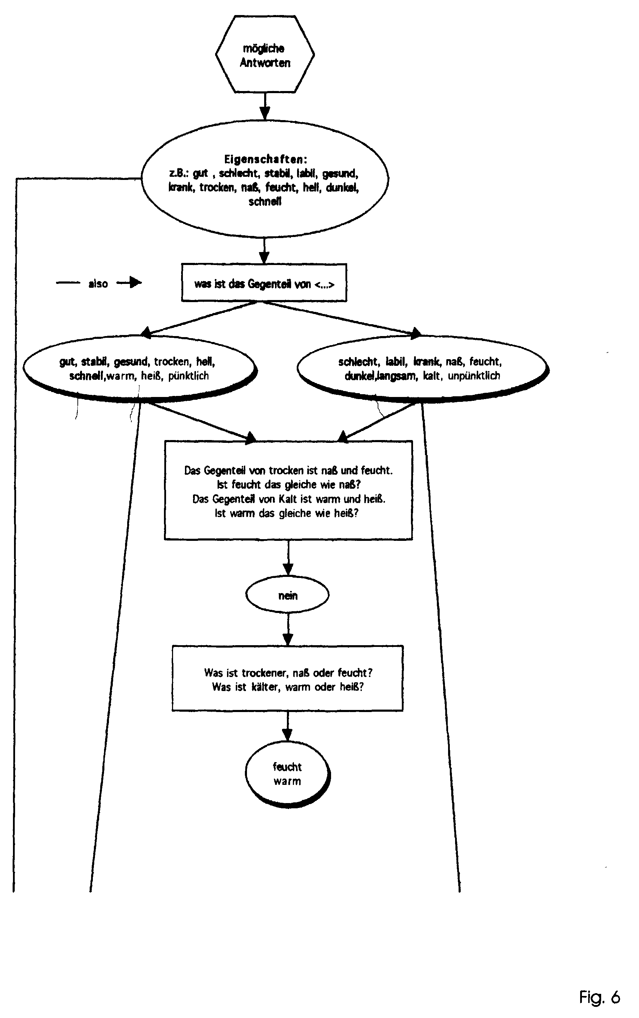

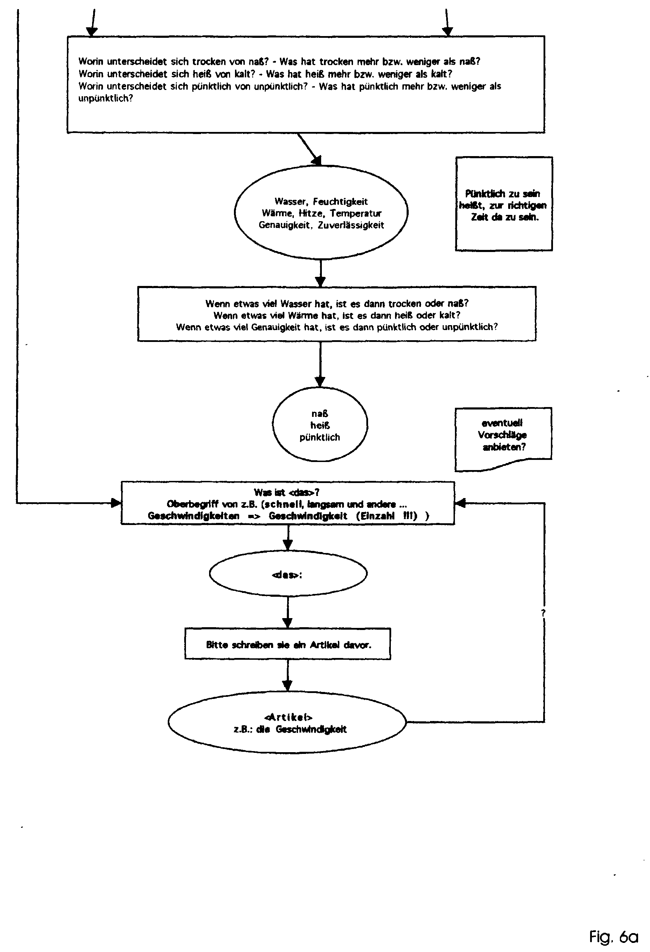

Figuren 6, 9a und 9b zeigen eine mögliche Frageebene zur Bestimmung des Kontextes in dem ein Adjektiv oder ein Adverb verwendet werden kann. Hierbei kann eine Bestimmung über das Gegenteil, die Maßeinheiten den Grad usw. erfolgen. Auch die Adjektive haben ihren Sinn nur in Verbindung mit dem beschriebenen Satzobjekt.

Mögliche Klassifizierungen entstehen auch hier dadurch, daß der Anwender nach einem möglichen Oberbegriff gefragt wird (z.B. was ist rot? - eine Farbe). Im wesentlichen wird allerdings das Satzobjekt hinterfragt, - dabei kommt man automatisch auf die Eigenschaft des Satzobjektes, das mit "wie" hinterfragt wird, also durch ein Adjektiv beantwortet werden muß.

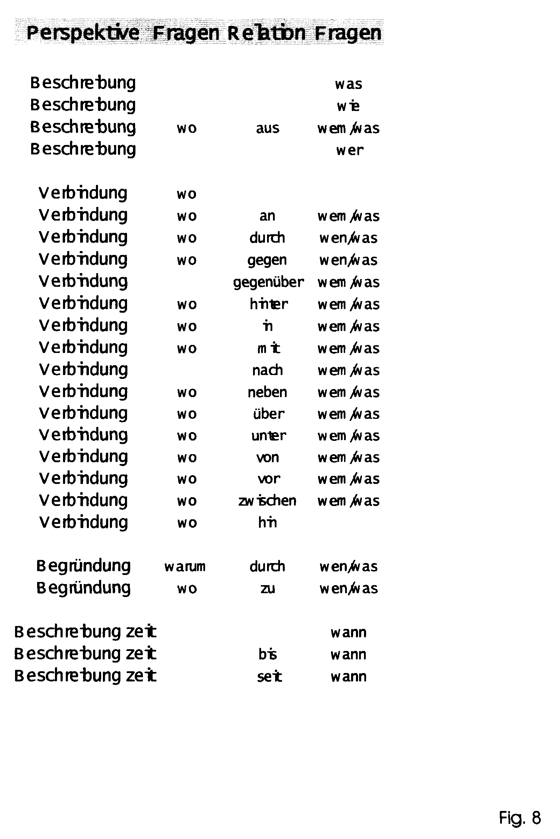

Bei Anfragen, wird die Anfrage analysiert und in Fragewörte, Verben und Satzobjekte soweit vorhanden zerlegt. Anhand dieser Informationen wird das Informationsobjekt 18 in der Datenbank bestimmt und die Entsprechende Frage, die durch einen Verweis die Antwort auf die Anfrage gibt. Bei einer anderen Form von Anfrage wird die Frage gewählt, deren Antwort der Benutzer kennt. Anhand der Frage und der gegebenen Antwort kann das System das gesuchte Informationsobjekt bestimmen. In Figur 8 sind hierbei Synonyme für die einzelnen Fragewörter aufgeführt, falls den Fragen im Fragesystem nicht entsprochen wird. Falls ein Verb nicht bestimmt werden konnte, so kann das System Vorschläge aus der 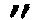 Was tut das Satzobjekt" Klasse geben, oder automatisch eines der Verben auswählen. Falls das Satzobjekt nicht bestimmt werden kann, so kann das Informationsobjekt ausgewählt werden, das den Eigenschaften des gesuchten Satzobjektes am nächsten kommt. Die Eigenschaften des Informationsobjektes werden durch die Verweise in den Klassen bestimmt. Ferner ist es möglich Oberbegriffe anzugeben z.B. was ist ein Hund: Antwort ein Tier. Anhand die gegeben Oberbegriffe kann ein interaktives Browsen erfolgen.

So kann z.B. bei einer automatischen Eingabe, wie es durch das Scannen von Unterlagen erfolgen kann, die Satzteile der Eingabe durch logische Zuordnung zu einer Klasse bzw. einer Frage bestimmt, um sie dann abzuspeichern.

### Bezugszeichen

- 10: Vorrichtung zur Anfrage und Speicherung von Informationen (Device to store and query information)
- 11: Speicher- und Lade-Modul (store and load module)
- 12: Anfrage- und Eingabe-Modul (query and input module)
- 13: Hierarchisches Fragesystem (hierarchical Query system)
- 14: Fragen (Query)
- 15: Frageebenen (Query Level)
- 16: Datenbank (Database)
- 17: Netzwerk (Network)
- 18: Objekt (Object)
- 19: Objekt-Id (Object Id)
- 20: Information (Information)
- 21: Klasse zur Aufnahme von Verweisen zu anderen Informationsobjekten (class having links to other information objects)
- 22: Verweise zu anderen Informationsobjekten (links to other objects)
- 23: Objekt-Tabelle (object table)
- 24: Verweis-Tabelle (link table)

## Patentansprüche

1. Vorrichtung zur Anfrage und/oder Speicherung von Informationen, mit einem Speicher- und/oder Lade-Modul (11), das in einer Datenbank (16) eine Vielzahl von Informationsobjekten (18) verwaltet, wobei die Informationsobjekte (18) 1-n Klassen (21) zur Aufnahme von 1-z Verweisen (22) zu anderen Informationsobjekten (18) speichern können, und die 1-n Fragen jede Beziehung zwischen jedem realen Satz-/ Objekt darstellt.

2. Vorrichtung nach Anspruch 1, gekennzeichnet, durch ein Anfrage- und/oder Eingabe-Modul (12) für die vorzugsweise interaktive Ein- und/oder Ausgabe , das mit dem Speicher-und/oder Lade-Modul (11) kommuniziert und das ein hierarchisches Fragesystem (13) aufnimmt und abarbeitet, wobei in dem hierarchische Fragesystem (13) 1-n Fragen (14) hierarchisch miteinander verknüpft sind und bei dem jeder Frage (14) eine Klasse (21) des Informationsobjektes (18) zugeordnet ist, wobei
bei einer Eingabe eines neuen ersten Informationsobjekts (18) die Antworten, soweit sie beim Durchlaufen des Fragesystems (13) abgegeben werden, als weitere neue abzuspeichernde oder bereits bestehende Informationsobjekte (18) über die entsprechende Klasse (21) mit Hilfe der Verweise (22) mit dem ersten Informationsobjekt (18) verknüpft werden, und/oder
bei einer Anfrage die Fragen (14) bestimmt werden, deren Antwort mit der Anfrage übereinstimmt, was durch einen Parsevorgang und anschließender Analyse erfolgen kann oder durch interaktive Bestimmung der Fragen (14) unter Berücksichtigung der Struktur des hierarchischen Fragesystem (13), wobei die Informationsobjekt (18) ausgewählt werden, deren Verweise (22) die höchsten Übereinstimmungen mit den gegebenen Antworten haben.

3. Vorrichtung nach Anspruch 1, dadurch gekennzeichnet, daß das hierarchische Fragesystem (13) seine Fragen (14) in Abhängigkeit des benötigten Vorwissens auf unterschiedlichen Frageebenen (15) anordnet, so daß die Fragen mit dem geringsten Vorwissen auf der obersten Frageebene (15) angeordnet sind, und diejenigen Fragen (15) die das größte Vorwissen benötigen auf der untersten.

4. Vorrichtung nach Anspruch 3, dadurch gekennzeichnet, daß bei der Speicherung von Informationen in einer Vordefinierungsebene die Wortklasse bestimmt wird um, dann in eine erste Frageebene (15) überzugehen, die speziell auf die Wortklasse abgestimmt ist, und die so gewonnen Informationen als Informationsobjekte (18) abzulegen.

5. Vorrichtung nach Anspruch 4, dadurch gekennzeichnet, daß bei der Speicherung von Informationen in einer Vordefinierungsebene bestimmt wird, ob es sich um ein Verb ein Adjektiv/Adverb oder ein Satzobjekt handelt,
- für den Fall, daß es sich um ein Verb handelt, vom Benutzer bestimmt wird, in welchem Kontext das Verb verwendet werden kann,
- für den Fall, daß es sich um ein Adjektiv/Adverb handelt, vom Benutzer der Kontext der Verwendung des Adjektiv/Adverb festgelegt wird,
- für den Fall, daß es sich um ein Satzobjekt handelt, das Satzobjekt mit Hilfe der Fragen (14) der obersten Frageebene (15) so bestimmt wird, daß keinerlei Vorwissen für eine sinnvolle Beantwortung notwendig ist.

6. Vorrichtung nach Anspruch 5, dadurch gekennzeichnet, daß die Fragen (14) zur Bestimmung des Satzobjektes in der ersten Frageebene (15) mit den Verben 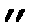 tun, sein, haben" und vorzugsweise dem Fragepronomen 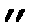 was" gebildet werden, wobei jede Antwort mit dem bestehenden Informationsobjekten (18) in der Datenbank (16) überprüft wird, um falls vorhanden neue Verweise (22) mit bestehenden Informationsobjekten (18) herzustellen, oder ein neues Informationsobjekt (18) abzuspeichern.

7. Vorrichtung nach Anspruch 6, dadurch gekennzeichnet, daß die Fragen hierarchisch angeordnet sind und aus den Fragewörtern 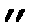 Was, Wo, Wie, Wann, Warum, Wohin, Woher, Womit, etc." den Verben 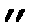 muß, kann, will, soll, darf etc." der Negation 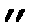 nicht" und den Verben 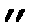 sein, tun, haben" gebildet werden, wobei diese Verben durch bereits gegebene Antworten erweitert werden können.

8. Vorrichtung nach Anspruch 1, dadurch gekennzeichnet, daß eine interaktive Auswahl einer Frage (14) vom Benutzer vorgenommen werden kann.

9. Vorrichtung nach Anspruch 1, dadurch gekennzeichnet, daß bei einer Anfrage die in einer natürlichen Sprache erfolgen kann, die Fragen zerlegt werden in Fragewörter, Verben und Satzobjekte und anhand dieser Informationen eine Frage (14) bestimmt wird, über deren Verweis (22) die Antwort gegeben werden kann.

10. Vorrichtung nach Anspruch 1, dadurch gekennzeichnet, das insbesondere für den internationalen Gebrauch das Anfrage- und Eingabe-Modul (12) dynamisch hierarchische Fragesysteme (13) laden kann.

11. Vorrichtung nach Anspruch 1, dadurch gekennzeichnet, daß das Anfrage und Eingabe-Modul (12) beim Durchlaufen des hierarchischen Fragesystems (13) während der Eingabe oder Anfrage von Informationsobjekten (18) Vorschläge aus den bereits vorhandenen Informationsobjekten (18) abgibt, wobei das Speicher- und Lade-Modul (11) anhand den bereits gewonnen Antworten, die Informationsobjekte (18) auswählt deren Verweise (22) die höchste Übereinstimmungen mit den Antworten aufweisen.

12. Vorrichtung nach Anspruch 1, dadurch gekennzeichnet, daß das Speicher- und Lade-Modul (11) eine Standarddatenbank ist, die entweder lokal ist oder auf die über ein Netzwerk (17) zugegriffen werden kann.

13. Vorrichtung nach Anspruch 1, dadurch gekennzeichnet, daß das Speicher- und Lade-Modul (11) ein relationale Datenbank ist, die mindestens zwei Tabellen (23, 24) umfaßt, wobei die erste Objekttabelle (23) die Informationsobjekte (18) aufnimmt und die zweite Verweistabelle (24) zur Aufnahme der Verweise (22) dient, die wiederum auf die Objekttabelle (23) zeigen.

14. Vorrichtung nach Anspruch 12, dadurch gekennzeichnet, daß die Objekttabelle (23) eine Spalte für eine Objekt-Id (19) und eine Spalte für eine Information (20) aufweist, und daß die Verweistabelle zwei Spalten für Objekt-ID (19) eine Spalte für eine der 1-n Klassen (21) aufweist, und eine Spalte für eine Verweis-ID (25) aufweist.

15. Vorrichtung nach Anspruch 1, gekennzeichnet durch ein Modul zur Konsistenzprüfung, das es ermöglicht Bedarfszyklen über zyklische Verweise(-ketten) (22) zwischen den Informationsobjekt (18) festzustellen, und das es ermöglicht auf fehlende Bedarfszyklen hinzuweisen.

16. Verfahren zur Anfrage und/oder Speicherung von Informationen, **dadurch gekennzeichnet, daß**
a) bei der Eingabe eines Satzobjektes ein Informationsobjekt angelegt wird, das durch Antworten auf ein hierarchischen Fragesystem, das 1-n Fragen verknüpft, denen 1-n Klassen mit Verweisen zugeordnet sind, näher bestimmt wird, wobei die Antworten durch Verweise zu anderen Informationsobjekten dargestellt werden
b) bei einer Anfrage, die Klassen bzw. Fragen bestimmt werden, über deren Verweis die Antwort gegeben werden kann.

17. Verfahren nach Anspruch 16 dadurch gekennzeichnet, daß bei der Speicherung von Informationen in einer Vordefinierungsebene bestimmt wird, ob es sich um ein Verb ein Adjektiv/Adverb oder ein Satzobjekt handelt,
a)
- für den Fall, daß es sich um ein Verb handelt, in der Frageebene vom Benutzer bestimmt wird, in welchem Kontext das Verb verwendet werden kann,
- für den Fall, daß es sich um ein Adjektiv/Adverb handelt, vom Benutzer in der Frageebene der Kontext der Verwendung festgelegt wird,
- für den Fall, daß es sich um ein Satzobjekt handelt, in der Frageebene mit Hilfe des hierarchischen Fragesystem das 1-n Fragen verknüpft, die den 1-n Klassen zugeordnet sind, das Satzobjekt durch Verweise zu anderen Informationsobjekten näher bestimmt wird, wobei der Einstieg in das hierarchische Fragesystem durch Fragen erfolgt, die keinerlei Vorwissen für eine sinnvolle Beantwortung benötigen und/oder
b) bei einer Anfrage die in einer natürlichen Sprache erfolgen kann, die Anfrage zerlegt wird in Fragewörter, Verben und Satzobjekte und anhand dieser Informationen eine Frage der 1-n Klassen bestimmt wird, über deren Verweis die Antwort gegeben werden kann.

18. Verfahren nach Anspruch 16, dadurch gekennzeichnet, daß die Fragen zur Bestimmung des Satzobjektes in der Frageebene mit den Verben 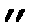 tun, sein, haben" und dem Fragepronomen 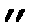 was" gebildet werden, wobei jede Antwort mit vorhandenen Informationsobjekten in der Datenbank verglichen werden, um falls vorhanden neue Verweise mit bestehenden Informationsobjekten herzustellen, oder ein neues Informationsobjekt abzuspeichern.

19. Verfahren nach Anspruch 16, dadurch gekennzeichnet, daß die Fragen hierarchisch angeordnet sind und aus den Fragewörtern 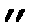 Was, Wo, Wie, Wann, Warum, Wohin, Woher, Womit, etc." den Verben 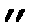 muß, kann, will, soll, darf etc." der Negation 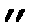 nicht" und den Verben 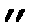 sein, tun, haben" gebildet werden, wobei diese Verben durch bereits gegebene Antworten erweitert werden können.

20. Verfahren nach Anspruch 16, dadurch gekennzeichnet, daß eine interaktive Auswahl einer Frage vorn Benutzer vorgenommen werden kann.

21. Verfahren nach Anspruch 16, gekennzeichnet durch eine Konsistenzprüfung, die es ermöglicht Bedarfszyklen zwischen den Informationsobjekt festzustellen, und die es ermöglicht auf fehlende Bedarfszyklen hinzuweisen.
